# EUROPEAN PATENT APPLICATION

(11) **EP 3 748 548 A1**
(43) Date of publication of application: **09.12.2020**
(21) Application number: 19880929.5
(22) Date of filing: 06.06.2019
(51) Int. Cl.: G06N 3/04

(54) **ADVERSARIAL LEARNING-BASED TEXT ANNOTATION METHOD AND DEVICE**

(30) Priority: 26.04.2019 CN 201910342500
(71) Applicant: Wangsu Science & Technology Co., Ltd., Shanghai 200030 (CN)
(72) Inventor: CAI, Zijian, Shanghai 200030 (CN); LI, Jinfeng, Shanghai 200030 (CN)
(74) Representative: Vinsome, Rex Martin
(86) International application number: PCT/CN2019/090338
(87) International publication number: WO 2020/215457

(57) **Abstract**

Some embodiments of the present disclosure provide a method and apparatus for tagging text based on adversarial learning-which belong to the field of natural language processing technologies. The method includes: tagging, by the apparatus for tagging text, a to-be-tagged text by using a character tag model, to generate a character tag result including tagged terms (101); segmenting, by the apparatus for tagging text, the to-be-tagged text through a preset word segmentation model, to generate a segmentation result including segmented terms (102); character tagging, by the apparatus for tagging text, for the character tag result again based on the segmented terms if the segmentation result is determined to be credible based on the character tag result, to obtain a fusion tag result, and outputting the fusion tag result (103); and outputting, by the apparatus for tagging text, the character tag result if the segmentation result is determined to be not credible based on the character tag result (104). The present disclosure can improve the accuracy and the recall rate of text tag.

## Description

### CROSS-REFERENCE TO RELATED APPLICATION

The present application claims priority benefit of Chinese Patent Application No. 201910342500.6 filed on April 26, 2019 and entitled "METHOD AND APPARATUS FOR TAGGING TEXT BASED ON ADVERSARIAL LEARNING". Each of which is incorporated by reference herein in its entirety.

### TECHNICAL FIELD

The present disclosure relates to the technical field of natural language processing, more particular to a method and apparatus for tagging text based on adversarial learning.

### BACKGROUND

Natural language processing (NLP) technology can efficiently implement systematic analysis, interpretation, and information extraction of text data, to enable a computer to understand and generate natural languages, thereby achieving effective interaction (for example use of an application program such as automatic message reply and voice assistant, etc.) between human and computers by using natural languages. Here the text tag technology provides a foundation for the industrial application of natural language processing.

Traditional machine learning (ML) can obtain a traditional machine learning model by learning a certain amount of text data and identifying association features between texts by using seed words, and automatically classify and tagging other texts by using the traditional machine learning model. Most traditional machine learning models rely heavily on texts, and generally mainly focus on lexical properties and syntactic properties of the text but ignore semantic properties of the text, which is not conducive for improving performance of the traditional machine learning model. In addition, most traditional machine learning models have poor generalization. Therefore, in the existing technology, the lexical properties, the syntactic properties and the semantic feature of the text may be identified through deep learning (DL) with high generalization and a neural network, a deep learning model may be obtained through continuous iterative training, and the text may be automatically tagged by using the deep learning model.

In the process of implementing the present disclosure, the inventors found that the existing technology has at least the following problems.

Due to the diversity of Chinese characters, it is difficult for a computer to cover all the terms obtained by permuting and combining Chinese characters. To improve generalization of the deep learning model and prevent overfitting of the deep learning model, text tag technologies for Chinese generally use a character-based deep learning model to tag a to-be-tagged text. With the continuous development of natural language processing technologies, the existing character-based deep learning models cannot meet the increasing requirements of natural language processing technologies on the accuracy of text tag. In addition, when a well-trained deep learning model is applied to a new field, a recall rate of the deep learning model is not high or is even 0. As a result, generalization of the deep learning model is poor, and word boundary tag tends to be fixed.

### SUMMARY

Some embodiments of the present disclosure provide a method and apparatus for tagging text based on adversarial learning, their technical solutions will be described in detail below.

In a first aspect, the present disclosure provides a method for tagging text based on adversarial learning, including:
tagging a to-be-tagged text by using a character tag model, to generate a character tag result including tagged terms;
segmenting the to-be-tagged text through a preset word segmentation model, to generate a segmentation result including segmented terms;
character tagging for the character tag result again based on the segmented terms if the segmentation result is determined to be credible according to the character tag result, to obtain a fusion tag result, and outputting the fusion tag result; and
outputting the character tag result if the segmentation result is determined to be not credible according to the character tag result.

For example, character tagging for the character tag result again based on the segmented terms if the segmentation result is determined to be credible according to the character tag result, to obtain the fusion tag result, including:
permuting and combining each of the tagged terms in the character tag result and each of the segmented terms in the segmentation result, to obtain related word pairs, and calculating similarities of all the related word pairs;
determining the segmentation result to be credible if similarities between all the tagged terms in the character tag result and any segmented term in the segmentation result all exceed a similarity threshold;
replacing the tagged terms with the segmented terms in the related word pairs whose similarities exceed the similarity threshold; and
character tagging for the character tag result again after be replaced, to obtain the fusion tag result.

For example, outputting the character tag result if the segmentation result is determined to be not credible according to the character tag result, including:
calculating an average confidence of the character tag result if similarities between any of the tagged terms and all the segmented terms do not exceeds the similarity threshold; and
determining the segmentation result to be not credible if the average confidence exceeds a confidence threshold, and outputting the character tag result.

For example, the method further includes:
calculating the confidence threshold and the similarity threshold according to a preset decreasing function and based on a training number of the character tag model.

For example, before tagging the to-be-tagged text by using the character tag model, to generate the character tag result including tagged terms, the method further includes:
training an initial character tag model by using an tagged text in an tag sample set, to generate the character tag model.

For example, after character tagging for the character tag result again based on the segmented terms if the segmentation result is determined to be credible according to the character tag result, to obtain the fusion tag result, the method further includes:
adding the fusion tag result to a fusion tag set;
extracting a preset number of tagged texts from the fusion tag set and the tag sample set, to generate a new tag sample set; and
training the character tag model by using the new tag sample set.

For example, after outputting the character tag result if the segmentation result is determined to be not credible according to the character tag result, the method further includes:
adding the character tag result to a recycling tag set; and
extracting a preset number of segmented texts from the recycling tag set, to train the word segmentation model.

For example, before extracting the preset number of segmented texts from the recycling tag set, to train the word segmentation model, the method further includes:
updating, according to a preset increasing function and the training number of the character tag model, the number of the segmented texts extracted from the recycling tag set.

In a second aspect, the present disclosure provides an apparatus for tagging text based on adversarial learning, including:
a character tag module, configured to tag a to-be-tagged text by using a character tag model, to generate a character tag result including tagged terms;
a word segmentation module, configured to segment the to-be-tagged text by a preset word segmentation model, to generate a segmentation result including segmented terms; and
a fusion tag module, configured to: character tag for the character tag result again based on the segmented terms if the segmentation result is determined to be credible according to the character tag result, to obtain a fusion tag result, and output the fusion tag result.
the character tag module is also configured to: output the character tag result if the segmentation result is determined to be not credible according to the character tag result.

For example, the fusion tag module is specifically configured to:
permute and combine each of the tagged terms in the character tag result and each of the segmented terms in the segmentation result, to obtain related word pairs, and calculate similarities of all the related word pairs;
determine the segmentation result to be credible if similarities between all the tagged terms in the character tag result and any segmented term in the segmentation result all exceed a similarity threshold;
replace the tagged terms with the segmented terms in the related word pairs whose similarities exceed the similarity threshold; and
character tag for the character tag result again after be replaced, to obtain the fusion tag result.

For example, the character tag module is specifically configured to:
calculate an average confidence of the character tag result if none of similarities between any of the tagged terms and all the segmented terms exceeds the similarity threshold; and
determine the segmentation result to be not credible if the average confidence exceeds a confidence threshold, and output the character tag result.

For example, the fusion tag module is also configured to:
calculate the confidence threshold and the similarity threshold based on a preset decreasing function and according to a training number of the character tag model.

For example, the character tag module is also configured to:
train an initial character tag model by using an tagged text in an tag sample set, to generate the character tag model.

For example, the fusion tag module is also configured to:
add the fusion tag result to a fusion tag set.

For example, the character tag module is also configured to:
extract a preset number of tagged texts from the fusion tag set and the tag sample set, to generate a new tag sample set; and
train the character tag model by using the new tag sample set.

For example, the character tag module is also configured to:
add the character tag result to a recycling tag set.

For example, the word segmentation module is also configured to:
extract a preset number of segmented texts from the recycling tag set, to train the word segmentation model.

For example, the word segmentation module is also configured to:
update, based on a preset increasing function and according to the training number of the character tag model, the number of the segmented texts extracted from the recycling tag set.

In a third aspect, the present disclosure provides an adversarial learning-based apparatus for tagging text, including a processor and a memory, where the memory stores at least one instruction, at least one program, a code set, or an instruction set, and the at least one instruction. The at least one program, the code set, or the instruction set is loaded and executed by the processor to implement the method for tagging text based on adversarial learning according to the first aspect.

According to a fourth aspect, the present disclosure provides a computer readable storage medium, where the storage medium stores at least one instruction, at least one program, a code set, or an instruction set. The at least one instruction, the at least one program, the code set, or the instruction set is loaded and executed by a processor to implement the method for tagging text based on adversarial learning according to the first aspect.

The beneficial effects according to the embodiments of the present disclosure are as follows:

Firstly, the character tag result of the character tag model is checked and corrected by using the word segmentation model, which can improve the accuracy and reliability of tagging the to-be-tagged text by using the character tag model. Secondly, the character tag model is trained by using a finally obtained fusion tag result as a training sample, and the remaining to-be-tagged texts are tagged to optimize model parameters needed by the character tag model, thereby making the character tag result more credible and improving the accuracy of the character tag model. Thirdly, the word segmentation model is trained by using the character tag result including new terms, so as to optimize the model parameters needed by the word segmentation model, improve the capability of the word segmentation model in identifying new terms, and obtain more fusion tag results, thereby improving the accuracy of the character tag model. Fourth, the performance of the character tag model and the performance of the word segmentation model are both improved, so that some hidden features of the character tag model can be identified, thereby improving the generalization of the character tag model, preventing word boundary tag from being fixed, and improving the recall rate of the character tag model.

### BRIEF DESCRIPTION OF THE DRAWINGS

To describe the technical solutions of the embodiments of the present disclosure more clearly, the accompanying drawings required for illustrating the embodiments will be introduced briefly in the following. Apparently, the accompanying drawings in the following description are merely some embodiments of the present disclosure, and a person of ordinary skill in the art may obtain other accompanying drawings based on these accompanying drawings without creative efforts.
FIG.1 is a flowchart of a method for tagging text based on adversarial learning according to an embodiment of the present disclosure.
FIG.2 is a schematic logic diagram of a method for tagging text based on adversarial learning according to an embodiment of the present disclosure.
FIG.3 is a schematic diagram of functional modules of an apparatus for tagging text based on adversarial learning according to an embodiment of the present disclosure.
FIG.4 is a schematic structural diagram of an apparatus for tagging text based on adversarial learning according to an embodiment of the present disclosure.

### DETAILED DESCRIPTION

To make the objectives, technical solutions and advantages of the present disclosure clearer, the embodiments of the present disclosure are described in detail below with reference to the accompanying drawings.

Embodiments of the present disclosure provide a method for tagging text based on adversarial learning. The method may be executed by an apparatus for tagging text, where the apparatus for tagging text may tag a large number of to-be-tagged texts in a text tag task through a deep learning model based on character size (which may be referred to as a character tag model), then segment (which may be referred to as segmentation processing) the same to-be-tagged text through a language model based on word size (which may be referred to as a word segmentation model), determine whether a word segmentation result (which may be referred to as a segmentation result) is credible by using an tag result of the character tag model (which may be referred to as a character tag result), and if the result is credible, generate a fusion tag result and use the fusion tag result as a final tag result of the to-be-tagged text, or otherwise use the character tag result as a final tag result of the to-be-tagged text. The apparatus for tagging text may include a processor and a memory, where the processor may be configured to perform text tag in the following procedures, and the memory may be configured to store data needed by and generated in the following processing procedures.

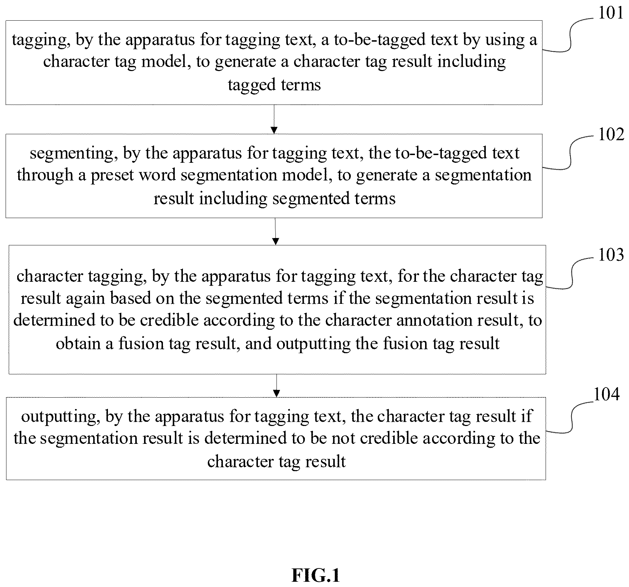

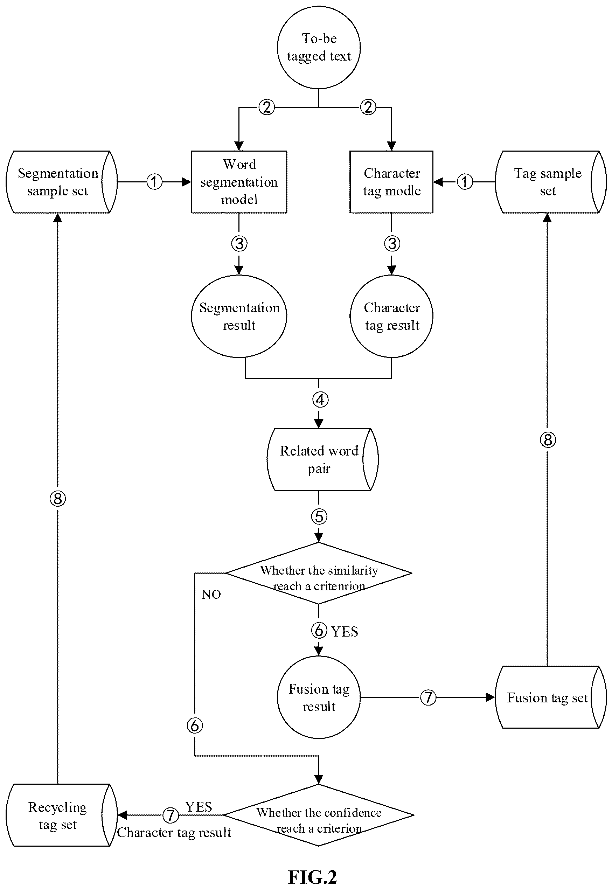

A method for tagging text based on adversarial learning according to the embodiments of the present disclosure will be described in detail below through specific embodiments. For ease of understanding, refer to FIG.1 and FIG.2. FIG.1 is a flowchart of a method for tagging text based on adversarial learning according to an embodiment of the present disclosure, and FIG.2 shows logic for implementing the method for tagging text based on adversarial learning, where sequence numbers 1 to 8 represent a logic sequence of processing performed by the apparatus for tagging text in the process of performing the text tag method.

Step 101: An apparatus for tagging text may tag a to-be-tagged text by using a character tag model to generate a character tag result including tagged terms.

In an embodiment, for a text tag task in which to-be-tagged texts are in a language (such as Chinese) that does not have obvious boundaries between words, one to-be-tagged text generally includes one or more terms using names as identifiers. The term may be a single character or may include two or more characters. Therefore, the apparatus for tagging text may use a character tag model to predict a tag corresponding to each character in each to-be-tagged text, so as to identify one or more terms included in each to-be-tagged text, and generate a character tag result including one or more tagged terms. An example in which the character tag model is a named entity recognition (NER) model is given. It is assumed that all tagged texts and un-tagged texts include a total of two types of named entities: place name and organization. Correspondingly, each character in all the tagged texts and the un-tagged texts corresponds to one of the following five types of tags: LOC-B (the first word of a place name), LOC-I (not the first word of a place name), ORG-B (the first word of an organization), ORG-I (not the first word of an organization), and O (non-named entity). For a to-be-tagged text " 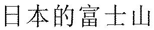 " (English meaning: Mount Fuji in Japan), a preliminary tag result of characters in the to-be-tagged text obtained by the apparatus for tagging text using the named entity recognition model is: 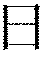 /LOC-B, 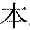 /LOC-I, 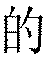 /O, 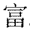 /ORG-B, 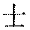 /ORG-I, and 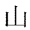 /ORG-I. Based on the preliminary tag result, the apparatus for tagging text may generate a character tag result including two tagged terms " 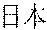 " (Japan) and " 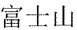 " (Mount Fuji). The tag is preset by a skilled person, and different text tag tasks may have different tags.

It should be noted that some to-be-tagged texts may not only include words in one language, but further include a small number of words in another language. For example, a to-be-tagged text which is mainly in Chinese may include a named entity "IP 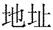 " (English meaning: IP address) in two languages. In this case, the character tag model may tag English words in the to-be-tagged text based on an English word size (word size). The apparatus for tagging text may tag the English word "IP" as the first word, and tag " 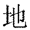 " and " 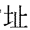 " as not the first word.

For example, before using the character tag model to tag a text, the apparatus for tagging text may train an initial character tag model by using a certain number of preset tagged texts. Correspondingly, processing before step 101 may be as follows: training, by the apparatus for tagging text, the initial character tag model by using a tagged text in a tag sample set, to generate the character tag model.

In an embodiment, before the apparatus for tagging text may tag the to-be-tagged text by using the character tag model, the skilled person may manually tag a small number of to-be-tagged texts in the text tag task in advance, to obtain a tag sample set including a plurality of tagged texts. The apparatus for tagging text may train the initial character tag model by using the plurality of tagged texts in the tag sample set that have been tagged manually, to generate the character tag model. It may be understood that there may be a difference between features of to-be-tagged texts in different text tag tasks. Therefore, for different text tag tasks, model parameters needed by the character tag model for predicting a tag corresponding to each character in each to-be-tagged text may also vary. For a text tag task, the apparatus for tagging text needs to train the initial character tag model by using a tag sample set corresponding to the text tag task, to obtain a model parameter needed by the text tag task, and preliminarily generate a character tag model suitable for the text tag task.

Step 102: The apparatus for tagging text may segment the to-be-tagged text through a preset word segmentation model, to generate a segmentation result including segmented terms.

In an embodiment, the skilled person may select a word-size-based language model (such as a Chinese segmentation system, an Embedding From Language Model (ELMo), a knowledge graph, or the like) having the same language representation characteristics as the character tag model, so that the apparatus for tagging text may obtain a language model (word segmentation model) suitable for the current text tag task by slightly adjusting a pretrained language model in advance through transfer learning, without need to train a new word segmentation model, thereby reducing the model training time. The apparatus for tagging text may segment the to-be-tagged text through the word segmentation model, to generate a segmentation result including segmented terms. An example in which the word segmentation model is a Chinese segmentation system is given. The apparatus for tagging text may segment the to-be-tagged text " 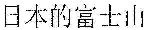 " through the Chinese segmentation system, to generate a segmentation result including three segmented terms: " 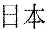 ", " 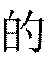 ", and " 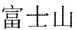 ".

Step 103: The apparatus for tagging text may character tag for the character tag result again based on the segmented terms if the segmentation result is determined to be credible according to the character tag result, to obtain a fusion tag result, and outputs the fusion tag result.

In an embodiment, the apparatus for tagging text may compare the segmentation result generated by the word segmentation model and the character tag result generated by the character tag model, to determine whether the segmentation result is credible. Specifically, the apparatus for tagging text may calculate a similarity between the character tag result and the segmentation result by using a machine learning algorithm based mainly on statistics (such as a term frequency-inverse document frequency (TF-IDF) with cosine similarity, hamming distance, SimHash, or the like). A larger value of the similarity between the tagged term and the segmented term indicates that attributes and functions of the tagged term and the segmented term are closer. When the similarity reaches a certain criterion, the apparatus for tagging text may determine that the segmentation result is more credible than the character tag result. In this case, the apparatus for tagging text may character tag for the character tag result again based on the segmented terms to obtain a fusion tag result, and output the fusion tag result as the tag result.

For example, for the same to-be-tagged text, the apparatus for tagging text may respectively calculate similarities between all the tagged terms in the character tag result and all the segmented terms in the segmentation result. Correspondingly, specific processing of step 103 may be as follows: permuting and combining, by the apparatus for tagging text, each of the tagged terms in the character tag result and each of the segmented terms in the segmentation result to obtain related word pairs, and calculating similarities of all the related word pairs; determining the segmentation result to be credible, by the apparatus for tagging text, if similarities between all the tagged terms in the character tag result and any segmented term in the segmentation result all exceed a similarity threshold; replacing, by the apparatus for tagging text, the tagged terms with the segmented terms in the related word pairs whose similarities exceed the similarity threshold; and character tagging, by the apparatus for tagging text, for the character tag result again after be replaced, to obtain the fusion tag result.

In an embodiment, an example in which the to-be-tagged text is " 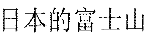 " is given. A preliminary tag result of " 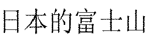 " obtained by the apparatus for tagging text by using a named entity recognition model may be: 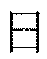 /LOC-B, 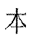 /LOC-I, 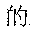 /LOC-I, 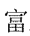 /O, 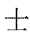 /ORG-B, and 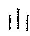 /ORG-I. Based on the preliminary tag result, a character tag result generated by the apparatus for tagging text is " 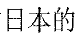 " and " 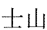 ", and a segmentation result generated by the apparatus for tagging text through the Chinese segmentation system is " 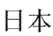 ", " 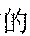 ", and " " 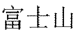 ". In this case, all related word pairs obtained by the apparatus for tagging text by permuting and combining the character tag result and the segmentation result are: ( 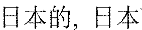 ), ( 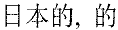 ), ( 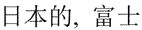 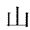 ), ( 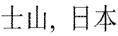 ), ( 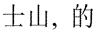 ) and ( 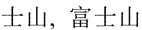 ). Then, the apparatus for tagging text may determine, through calculation using the machine learning algorithm based mainly on statistics, that related word pairs whose similarities exceed the similarity threshold are ( 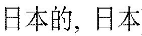 ) and ( 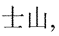 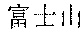 ). If the similarities between all the tagged terms in the character tag result and any segmented term in the segmentation result all exceed the similarity threshold, the apparatus for tagging text determines the segmentation result to be credible. In this case, the apparatus for tagging text may respectively replace the tagged terms " 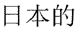 " and " 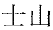 " corresponding to the character tag result with the segmented terms " 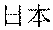 " and " 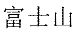 ". Because the segmented term does not carry any character-based tag, the apparatus for tagging text may character tag for the character tag result again after be replaced, to obtain a fusion tag result: 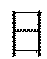 /LOC-B, 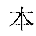 /LOC-I, 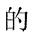 /O, 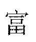 /ORG-B, 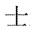 /ORG-I, and 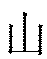 /ORG-I.

For example, the fusion tag result may be used as a training sample for enhanced training of the character tag model, and correspondingly, processing after step 103 may be as follows: adding, by the apparatus for tagging text, the fusion tag result to a fusion tag set; extracting, by the apparatus for tagging text, a preset number of tagged texts from the fusion tag set and the tag sample set, to generate a new sample tag set; and training, by the apparatus for tagging text, the character tag model by using the new tag sample set.

In an embodiment, to obtain a large number of training samples to optimize the performance of the character tag model and reduce manpower costs as much as possible, the fusion tag result may be used as a training sample to train the character tag model (which may be referred to as iterative training), and the tagged texts in the tag sample set are also used to train the character tag model, to increase the weight of tagged terms that have been tagged correctly. It may be understood that the apparatus for tagging text generally need to perform multiple times of iterative training on the character tag model to obtain a high-performance character tag model, so as to accurately tag more to-be-tagged texts. After successfully tagging and segmenting the to-be-tagged texts, the apparatus for tagging text may generate a fusion tag result, and add the fusion tag result to a fusion tag set. Then, the apparatus for tagging text may respectively extract a preset number of tagged texts from the fusion tag set and the original tag sample set to form a new tag sample set. The apparatus for tagging text may train the character tag model by using the new tag sample set, so as to optimize a model parameter of the character tag model. For example, a total number of training samples used for training the character tag model may basically be maintained at 1000. The apparatus for tagging text may randomly extract 600 tagged texts from the fusion tag set and randomly extract 400 tagged texts from the original tag sample set, to form a new tag sample set having a total number of 1000 training samples, and then use the new tag sample set to train the character tag model again. It may be understood that provided that the total number of training samples is basically maintained unchanged, the apparatus for tagging text may randomly extract tagged texts from the fusion tag set and the tag sample set respectively according to a ratio (for example, 3:2), to form a new tag sample set.

Step 104: The apparatus for tagging text outputs the character tag result if the segmentation result is determined to be not credible according to the character tag result.

In an embodiment, with the constant development of the society, more new publicly known terms (such as human names, place names, organization names, abbreviations, and derivatives in either Chinese or other languages) will be created, which have not been added to a segmentation dictionary used by the word segmentation model (such terms may be referred to as new terms). For a to-be-tagged text including new terms, the apparatus for tagging text may tag the to-be-tagged text through the character tag model, to generate a character tag result. However, the word segmentation model cannot identify new terms that have not been added to the segmentation dictionary. In addition, after the to-be-tagged text is tagged, tagged terms that do not make sense as a phrase may be generated. It may be understood that there may be two cases in which the similarity between the character tag result and the segmentation result does not reach the criterion: the character tag model identifies new terms; and the character tag model generates tagged terms that do not make sense as a phrase. In this case, the apparatus for tagging text cannot compare the segmentation result and the character tag result to determine whether the segmentation result is credible. Therefore, the apparatus for tagging text may determine whether the segmentation result is credible by determining whether the character tag result is credible. For the same to-be-tagged text, if the apparatus for tagging text determines that the character tag result is credible, the segmentation result is not credible relative to the character tag result. In this case, the apparatus for tagging text may output the character tag result as a final tag result of the to-be-tagged text.

For example, the apparatus for tagging text may determine whether the character tag result is credible depending on whether an average confidence of the character tag result reaches a criterion, so that whether the segmentation result is credible may be determined. Correspondingly, specific processing of step 104 may be as follows: if none of similarities between any tagged term and all the segmented terms exceeds the similarity threshold, calculating, by the apparatus for tagging text, an average confidence of the character tag result; and if the average confidence exceeds a confidence threshold, determining, by the apparatus for tagging text, the segmentation result to be not credible, and outputting the character tag result.

In an embodiment, if none of similarities between any tagged term and all the segmented terms exceeds the similarity threshold, it indicates that the segmentation result does not include any segmented term having similar attributes and functions to the tagged term, and the word segmentation model cannot effectively check and correct the tagged term. In this case, the apparatus for tagging text may calculate an average value of confidences corresponding to all characters in the character tag result, to obtain the average confidence of the character tag result of the to-be-tagged text. When the average confidence of the character tag result exceeds the confidence threshold, it indicates that the character tag result is credible to a certain degree, and a new term may exist in the character tag result but may not be identified by the word segmentation model, while the segmentation result is not credible. In this case, the apparatus for tagging text may output the character tag result as the final tag result of the to-be-tagged text. When the average confidence of the character tag result does not exceed the confidence threshold, it indicates that the character tag result is not credible to a certain degree, and the tag of the to-be-tagged text using the character tag model fails. In this case, the to-be-tagged text corresponding to the character tag result may be discarded. When tagging the to-be-tagged text by using the character tag model, the apparatus for tagging text may obtain a confidence of a preliminary tag result of each character. A method for calculating the confidence of the preliminary tag result of each character may be as follows: the apparatus for tagging text first calculates a score of each character in the to-be-tagged text tagged as each preset tag by using a long short-term memory (LSTM) layer of a named entity recognition model, and then a character tag result and a confidence of a preliminary tag result of each character in the character tag result are generated based on the score of each label corresponding to each character by using a conditional random fields (CRF) layer of the named entity recognition model. The confidence is an output result of the CRF layer, and a specific calculation process is not described in the present disclosure.

An example in which a to-be-tagged text is " 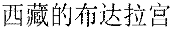 " (English meaning: Potala Palace in Tibet) is given. A preliminary tag result of " 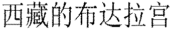 " obtained by the apparatus for tagging text through a named entity recognition model may be: 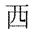 , 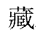 /LOC-I, 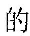 /O, 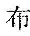 /LOC-B, 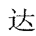 /LOC-I, 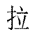 /LOC-I, and 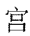 /ORG-I. Based on the preliminary tag result, a character tag result generated by the apparatus for tagging text is " 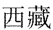 " and " 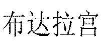 ", and a segmentation result generated by the apparatus for tagging text through the Chinese segmentation system is " 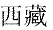 ", " 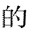 ", " 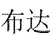 " and " 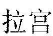 ". In this case, no segmented term having similar attributes and functions to the tagged term " 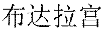 " exists, none of similarities between the tagged term " 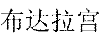 " and all the segmented terms exceeds the similarity threshold, and the word segmentation model cannot effectively check and correct the tagged term " 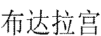 ". Therefore, the apparatus for tagging text may calculate an average confidence of the character tag result " 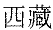 " and " 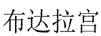 " based on a confidence of each character of " 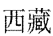 " and " 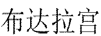 ". If the average confidence exceeds the confidence threshold, the apparatus for tagging text determines the character tag result to be credible, and determines the segmentation result to be not credible. Then, the apparatus for tagging text may output the character tag result " 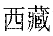 " and " 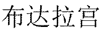 " as a final tag result of the to-be-tagged text " 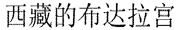 ".

For example, as the training number of the character tag model and the word segmentation model increases, the similarity threshold and the confidence threshold may be lowered properly. Corresponding processing may be as follows: updating, by the apparatus for tagging text, the confidence threshold and the similarity threshold according to a preset decreasing function and the training number of the character tag model.

In an embodiment, with the continuous iterative training of the character tag model and the word segmentation model, on one hand, the character tag result obtained by the character tag model for the to-be-tagged text will be more credible, and therefore the confidence threshold may be lowered continuously, so that the apparatus for tagging text can check more character tag results by using the word segmentation model; on the other hand, the number of new terms encountered by the word segmentation model will decrease continuously, and the segmentation result obtained by the word segmentation model for the to-be-tagged text will be more credible, and therefore, the similarity threshold may be lowered continuously, to avoid the case that the word segmentation model cannot effectively check and correct the tagged terms due to an excessively high similarity threshold, and ensure the recall of a fusion tag result that have been tagged correctly. Therefore, the apparatus for tagging text may update the confidence threshold and the similarity threshold according to a preset decreasing function and the training number of the character tag model.

It should be noted that a decreasing function used to calculate the confidence threshold may be: Confidence threshold = a - 1 × 10⁻⁴ × time_step, and a decreasing function used to calculate the similarity threshold may be: Similarity threshold = b-1 × 10⁻⁴ × time_step. In the functions, constant a represents a maximum value of the confidence threshold and has a value range of (0, 1); constant b represents a maximum value of the similarity threshold and has a value range of (0, 1); and time_step represents a training step of the character tag model, and a larger number of times of iterative training of the character tag model indicates a larger value of the training step. It may be understood that the values of constant a and constant b may be set by the skilled person based on experience, and are not limited in the present disclosure.

For example, to enable the word segmentation model to identify new terms, the apparatus for tagging text may train the word segmentation model through adversarial learning by using the character tag result. In this way, the character tag model and the word segmentation model can supervise each other, so that the performance can be improved continuously. Correspondingly, processing after step 104 may be as follows: adding, by the apparatus for tagging text, the character tag result to a recycling tag set; and extracting, by the apparatus for tagging text, a preset number of segmented texts from the recycling tag set to train the word segmentation model.

In an embodiment, to optimize the performance of the word segmentation model and reduce manpower costs as much as possible, a character tag result including new terms may be used as a training sample to train the word segmentation model. After determining the segmentation result to be not credible according to the character tag result, the apparatus for tagging text may add the character tag result to the recycling tag set. Then, the apparatus for tagging text may extract a preset number of segmented texts from the recycling tag set to train the word segmentation model, so that the word segmentation model can identify the new terms in the character tag result, thereby optimizing the performance of the word segmentation model.

It should be noted that after an initial word segmentation model having the same language representation characteristics as the character tag model is built through transfer learning, the word segmentation model may be trained in advance, to obtain a word segmentation model suitable for a current text tag task. Before the apparatus for tagging text segments the to-be-tagged text by using the word segmentation model, the skilled person may manually segment a small number of to-be-tagged texts in the text tag task in advance, to obtain a segmentation sample set including a plurality of segmented texts. Then, the apparatus for tagging text trains the initial word segmentation model by using the plurality of segmented texts in the segmentation sample set that have been segmented manually, to generate the word segmentation model. The plurality of segmented texts that have been segmented manually and the tagged texts that have been tagged manually may be the same text data. It may be understood that when extracting the preset number of segmented texts from the recycling tag set to train the word segmentation model, the apparatus for tagging text may further extract a preset number of segmented texts from the segmentation sample set to form a new segmentation sample set; and the apparatus for tagging text trains the word segmentation model by using the new segmentation sample set. For example, a total number of training samples used for training the word segmentation model may be maintained at 1000. The apparatus for tagging text may randomly extract 600 segmented texts from the recycling tag set and randomly extract 400 segmented texts from the original segmentation sample set, to form a new segmentation sample set having a total number of 1000 training samples, and then use the new segmentation sample set to train the word segmentation model again. It may be understood that provided that the total number of training samples is maintained unchanged, the apparatus for tagging text may randomly extract the segmented texts from the recycling tag set and the segmentation sample set respectively according to a certain ratio (for example, 3:2), to form a new segmentation sample set.

For example, when the apparatus for tagging text performs a small number of times of iterative training on the character tag model, the apparatus for tagging text may extract a small number of segmented texts from the recycling tag set to train the word segmentation model. Correspondingly, before the extracting, by the apparatus for tagging text, a preset number of segmented texts from the recycling tag set to train the word segmentation model, the method may further include: updating, based on a preset increasing function and the training number of the character tag model, a number of segmented texts extracted from the recycling tag set.

In an embodiment, when the apparatus for tagging text performs a small number of times of iterative training on the character tag model, the performance of the character tag model is not stable, and there is a high probability that an tagged term that does not make sense as a phrase exists in the character tag result in the recycling tag set. In this case, the apparatus for tagging text should avoid introducing a large number of tagged texts that do not make sense as a phrase to perform incorrect training of the word segmentation model when the performance of the character tag model is not stable. In contrast, when the apparatus for tagging text performs a large number of times of iterative training on the character tag model, the performance of the character tag model is stable, there is a low probability that an tagged term that does not make sense as a phrase exists in the character tag result in the recycling tag set, but there is a probability that a new term that cannot be identified by the word segmentation model. In this case, the apparatus for tagging text should introduce new terms as much as possible to train the word segmentation model, so as to improve the performance of the word segmentation model. Therefore, based on a preset increasing function and the training number of the character tag model, the apparatus for tagging text may continuously increase the number of segmented texts extracted from the recycling tag set.

It should be noted that an increasing function used to calculate the number of segmented texts extracted from the recycling tag set may be: S = m + n × i. In the function, constant m represents a minimum value of the number of segmented texts extracted by the apparatus for tagging text from the recycling tag set; constant n represents an amount by which the number of segmented texts extracted by the apparatus for tagging text from the recycling tag set is increased after each iterative training; and variable i represents the number of times of iterative training of the character tag model. It may be understood that the values of constant m and constant n may be set by the skilled person based on experience, and are not limited in the present disclosure.

It should be noted that the performance of the character tag model and the word segmentation model may be improved to a certain degree through adversarial learning, and therefore, the number of fusion tag results in the fusion tag set may continuously increase as the number of times of iterative training of the character tag model increases. It may be understood that when the number of fusion tag results in the fusion tag set no longer changes, it indicates that the performance of the character tag model and the word segmentation model is not improved after the latest iterative training, and therefore it may be considered that the performance of the character tag model and the word segmentation model has been optimal for the current text tag task. In this case, the apparatus for tagging text may stop the iterative training of the character tag model and the word segmentation model.

In the embodiments of the present disclosure, after the to-be-tagged text is tagged automatically, the character tag model and the word segmentation model may be iteratively trained simultaneously through adversarial learning, and the following beneficial effects can be brought: Firstly, the character tag result of the character tag model is checked and corrected by using the word segmentation model, so as to improve the accuracy and reliability of tag of the to-be-tagged text by using the character tag model. Secondly, the character tag model is trained by using a finally obtained fusion tag result as a training sample, and the remaining to-be-tagged texts are tagged to optimize model parameters needed by the character tag model, making the character tag result more credible, and improving the accuracy of the character tag model. Thirdly, the word segmentation model is trained by using the character tag result including new terms, so as to optimize the model parameters needed by the word segmentation model, improve the capability of the word segmentation model in identifying new terms, and obtain more fusion tag results, thereby improving the accuracy of the character tag model. Fourth, the performance of the character tag model and the performance of the word segmentation model are both improved, so that some hidden features of the character tag model can be identified, thereby improving the generalization of the character tag model, preventing word boundary tag from being fixed, and improving the recall rate of the character tag model.

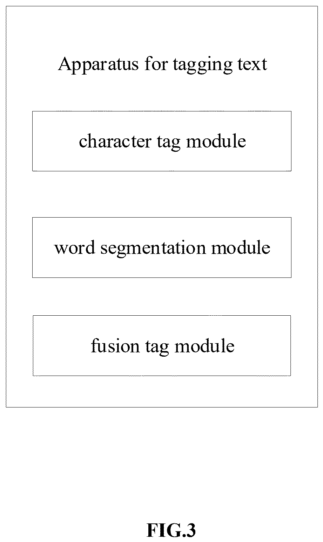

Based on the same technical idea, an embodiment of the present disclosure further provides an apparatus for tagging text based on adversarial learning. As shown in FIG.3, the apparatus includes:
a character tag module, configured to tag a to-be-tagged text by using a character tag model to generate a character tag result including tagged terms;
a word segmentation module, configured to segment the to-be-tagged text through a preset word segmentation model to generate a segmentation result including segmented terms; and
a fusion tag module, configured to: character tag for the character tag result again based on the segmented terms if the segmentation result is determined to be credible according to the character tag result, to obtain a fusion tag result, and output the fusion tag result.
the character tag module is further configured to: output the character tag result if the segmentation result is determined to be not credible according to the character tag result.

For example, the fusion tag module is specifically configured to:
permute and combine each of the tagged terms in the character tag result and each of the segmented terms in the segmentation result, to obtain related word pairs, and calculate similarities of all the related word pairs;
determine the segmentation result to be credible if similarities between all the tagged terms in the character tag result and any segmented term in the segmentation result all exceed a similarity threshold;
replace the tagged terms with the segmented terms in the related word pairs whose similarities exceed the similarity threshold; and
character tag for the character tag result again after be replaced, to obtain the fusion tag result.

For example, the character tag module is specifically configured to:
calculate an average confidence of the character tag result if none of similarities between any of the tagged terms and all the segmented terms exceeds the similarity threshold; and
determine the segmentation result to be not credible if the average confidence exceeds a confidence threshold, and output the character tag result.

Further, the fusion tag module is also configured to:
calculate the confidence threshold and the similarity threshold based on a preset decreasing function and according to the training number of the character tag model.

Further, the character tag module is also configured to:
train an initial character tag model by using an tagged text in an tag sample set, to generate the character tag model.

Further, the fusion tag module is also configured to:
add the fusion tag result to a fusion tag set.

Further, the character tag module is also configured to:
extract a preset number of tagged texts from the fusion tag set and the tag sample set, to generate a new tag sample set;
train the character tag model by using the new tag sample set.

Further, the character tag module is also configured to:
add the character tag result to a recycling tag set.

Further, the word segmentation module is also configured to:
extract a preset number of segmented texts from the recycling tag set to train the word segmentation model.

Further, the word segmentation module is also configured to:
update, based on a preset increasing function and according to the training number of the character tag model, the number of the segmented texts extracted from the recycling tag set.

In the embodiments of the present disclosure, after the to-be-tagged text is tagged automatically, the character tag model and the word segmentation model may be iteratively trained simultaneously through adversarial learning, and the following beneficial effects can be brought: Firstly, the character tag result of the character tag model is checked and corrected by using the word segmentation model, so as to improve the accuracy and reliability of tag of the to-be-tagged text by using the character tag model. Secondly, the character tag model is trained by using a finally obtained fusion tag result as a training sample, and the remaining to-be-tagged texts are tagged to optimize model parameters needed by the character tag model, making the character tag result more credible, and improving the accuracy of the character tag model. Thirdly, the word segmentation model is trained by using the character tag result including new terms, so as to optimize the model parameters needed by the word segmentation model, improve the capability of the word segmentation model in identifying new terms, and obtain more fusion tag results, thereby improving the accuracy of the character tag model. Fourth, the performance of the character tag model and the performance of the word segmentation model are both improved, so that some hidden features of the character tag model can be identified, thereby improving the generalization of the character tag model, preventing word boundary tag from being fixed, and improving the recall rate of the character tag model.

It should be noted that, when the apparatus for tagging text based on adversarial learning provided by the foregoing embodiment performing a text tag, the foregoing division of functional modules is merely used as an example for description. In an actual application, the foregoing functions may be implemented by different functional modules as needed, that is, an internal structure of the device is divided into different functional modules to implement all or some of functions described above. In addition, an inventive concept of the apparatus for tagging text based on adversarial learning provided in the foregoing embodiment is the same as that of the embodiment of the method for tagging text based on adversarial learning. For a specific implementation process, refer to the method embodiments for details, herein are not described again.

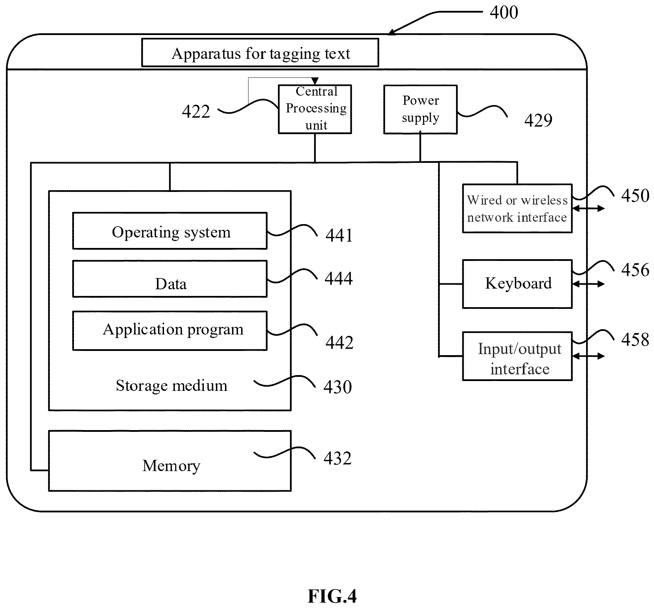

FIG.4 is a schematic structural diagram of an apparatus for tagging text based on adversarial learning according to an embodiment of the present disclosure. The apparatus for tagging text based on adversarial learning 400 may vary greatly due to different configurations or performance, and may include one or more central processing units (CPU) 422 (for example, one or more processors) and memories 432, and one or more storage media 430 (for example, one or more mass storage devices) storing an application program 442 or data 444. The memory 432 and the storage medium 430 may be transient or persistent storages. The program stored in the storage medium 430 may include one or more modules (not shown), and each module may include a series of instructions and operations for the apparatus for tagging text 400. Further, the central processing unit 422 may be configured to communicate with the storage medium 430, and execute, on the apparatus for tagging text based on adversarial learning 400, a series of instructions and operations in the storage medium 430.

The apparatus for tagging text based on adversarial learning 400 may further include one or more power supplies 429, one or more wired or wireless network interfaces 450, one or more input/output interfaces 458, one or more keyboards 456, and/or one or more operating systems 441, for example, Windows Server, Mac OS X, UnixTM, Linux, or FreeBSD, and so on.

The apparatus for tagging text based on adversarial learning 400 may include a memory and one or more programs, where the one or more programs are stored in the memory, and are configured, so that the one or more processors execute the one or more programs, including instructions for performing the method for tagging text based on adversarial learning.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely preferred embodiments of the present disclosure, but are not intended to limit the present disclosure. Any modification, equivalent replacement, or improvement made within the spirit and principle of the present disclosure shall fall within the protection scope of the present disclosure.

## Claims

1. A method for tagging text based on adversarial learning, comprising:
tagging a to-be-tagged text by using a character tag model, to generate a character tag result comprising tagged terms;
segmenting the to-be-tagged text through a preset word segmentation model, to generate a segmentation result comprising segmented terms;
character tagging for the character tag result again based on the segmented terms if the segmentation result is determined to be credible according to the character tag result, to obtain a fusion tag result, and outputting the fusion tag result; and
outputting the character tag result if the segmentation result is determined to be not credible according to the character tag result.

2. The method according to claim 1, wherein character tagging for the character tag result again based on the segmented terms if the segmentation result is determined to be credible according to the character tag result, to obtain the fusion tag result comprises:
permuting and combining each of the tagged terms in the character tag result and each of the segmented terms in the segmentation result, to obtain related word pairs, and calculating similarities of all the related word pairs;
determining the segmentation result to be credible if similarities between all the tagged terms in the character tag result and any segmented term in the segmentation result all exceed a similarity threshold;
replacing the tagged terms with the segmented terms in the related word pairs whose similarities exceed the similarity threshold; and
character tagging for the character tag result again after be replaced, to obtain the fusion tag result.

3. The method according to claim 2, wherein outputting the character tag result if the segmentation result is determined to be not credible according to the character tag result comprises:
calculating an average confidence of the character tag result if similarities between any of the tagged terms and all the segmented terms do not exceed the similarity threshold; and
determining the segmentation result to be not credible if the average confidence exceeds a confidence threshold, and outputting the character tag result.

4. The method according to claims 2 or 3, wherein the method further comprises:
updating the confidence threshold and the similarity threshold based on a preset decreasing function and according to a training number of the character tag model.

5. The method according to claim 1, wherein before the tagging the to-be-tagged text by using the character tag model, to generate the character tag result comprising tagged terms, the method further comprises:
training an initial character tag model by using an tagged text in an tag sample set, to generate the character tag model.

6. The method according to claim 5, wherein after character tagging for the character tag result again based on the segmented terms if the segmentation result is determined to be credible according to the character tag result, to obtain the fusion tag result, the method further comprises:
adding the fusion tag result to a fusion tag set;
extracting a preset number of tagged texts from the fusion tag set and the tag sample set, to generate a new tag sample set; and
training the character tag model by using the new tag sample set.

7. The method according to claim 1, wherein after outputting the character tag result if the segmentation result is determined to be not credible according to the character tag result, the method further comprises:
adding the character tag result to a recycling tag set;
extracting a preset number of segmented texts from the recycling tag set to train the word segmentation model.

8. The method according to claim 7, wherein before extracting the preset number of segmented texts from the recycling tag set to train the word segmentation model, the method further comprises:
updating, based on a preset increasing function and a training number of the character tag model, the number of the segmented texts extracted from the recycling tag set.

9. An apparatus for tagging text based on adversarial learning, comprising:
a character tag module, configured to tag a to-be-tagged text by using a character tag model, to generate a character tag result comprising tagged terms;
a word segmentation module, configured to segment the to-be-tagged text through a preset word segmentation model, to generate a segmentation result comprising segmented terms; and
a fusion tag module, configured to character tag for the character tag result again based on the segmented terms if the segmentation result is determined to be credible according to the character tag result, to obtain a fusion tag result, and output the fusion tag result;
wherein the character tag module is further configured to output the character tag result if the segmentation result is determined to be not credible according to the character tag result.

10. The apparatus according to claim 9, wherein the fusion tag module is configured to:
permute and combine each of the tagged terms in the character tag result and each of the segmented terms in the segmentation result, to obtain related word pairs, and calculate similarities of all the related word pairs;
determine the segmentation result to be credible if similarities between all the tagged terms in the character tag result and any segmented term in the segmentation result all exceed a similarity threshold;
replace the tagged terms with the segmented terms in the related word pairs whose similarities exceed the similarity threshold; and
character tag for the character tag result after be replaced, to obtain the fusion tag result.

11. The apparatus according to claim 10, wherein the character tag module is specifically configured to:
calculate an average confidence of the character tag result if similarities between any of the tagged terms and all the segmented terms do not exceed the similarity threshold; and
determine the segmentation result to be not credible if the average confidence exceeds a confidence threshold, and output the character tag result.

12. The apparatus according to claim 9, wherein the character tag module is further configured to: train an initial character tag model by using an tagged text in an tag sample set, to generate the character tag model.

13. The apparatus according to claim 12, wherein the fusion tag module is further configured to: add the fusion tag result to a fusion tag set;
the character tag module is further configured to:
extract a preset number of tagged texts from the fusion tag set and the tag sample set, to generate a new tag sample set; and
train the character tag model by using the new tag sample set.

14. The apparatus according to claim 9, wherein the character tag module is further configured to: add the character tag result to a recycling tag set; and
the word segmentation module is further configured to: extract a preset number of segmented texts from the recycling tag set, to train the word segmentation model.

15. An apparatus for tagging text based on adversarial learning, comprising:
a processor and a memory;
wherein the memory stores at least one instruction, at least one program, a code set, or an instruction set, and
the at least one instruction, the at least one program, the code set, or the instruction set is loaded and executed by the processor to implement a method for tagging text based on adversarial learning according to claims 1 to 8.

16. A computer readable storage medium, wherein the storage medium stores at least one instruction, at least one program, a code set, or an instruction set, and
the at least one instruction, the at least one program, the code set, or the instruction set is loaded and executed by a processor to implement a method for tagging text based on adversarial learning according to any one of claims 1 to 8.
